# FASCICULE DE BREVET EUROPEEN

(11) **EP 2 606 495 B1**
(45) Date de publication et mention de la délivrance du brevet: **03.06.2015**
(21) Numéro de dépôt: 11755369.3
(22) Date de dépôt: 03.09.2011
(51) Int. Cl.: H01F 7/02, F25B 21/00

(54) **GENERATEUR DE CHAMP MAGNETIQUE POUR APPAREIL THERMIQUE MAGNETOCALORIOUE**
MAGNETFELDGENERATOR FÜR EINE MAGNETOKALORISCHE THERMISCHE VORRICHTUNG
MAGNETIC-FIELD GENERATOR FOR A MAGNETOCALORIC THERMAL DEVICE

(30) Priorité: 16.08.2010 US 857019; 16.08.2010 FR 1056605
(43) Date de publication de la demande: 26.06.2013
(73) Titulaire: Cooltech Applications S.A.S., 67810 Holtzheim (FR)
(72) Inventeur: HEITZLER, Jean-Claude, F-68180 Horbourg-Wihr (FR); MULLER, Christian, F-67000 Strasbourg (FR)
(74) Mandataire: Koelbel, Caroline
(86) Numéro de dépôt international: PCT/FR2011/000455
(87) Numéro de publication internationale: WO 2012/022857

(56) Documents cités:
- EP-A1- 0 402 548
- EP-A1- 1 847 788
- WO-A2-2010/139083
- US-A1- 2005 242 912
- US-B1- 7 038 565
- LEE S J ET AL: "Design of Permanent-Magnet Field Source for Rotary-Magnetic Refrigeration Systems", IEEE TRANSACTIONS ON MAGNETICS, IEEE SERVICE CENTER, NEW YORK, NY, US, vol. 38, no. 5, 1 septembre 2002 (2002-09-01), XP011075475, ISSN: 0018-9464
- DATABASE WPI Week 199220 Thomson Scientific, London, GB; AN 1992-165136 XP002642250, -& SU 1 666 887 A1 (KARAGUSOV V I) 30 juillet 1991 (1991-07-30)

## Description

### Domaine technique :

La présente invention concerne un générateur de champ magnétique pour un appareil thermique magnétocalorique, ledit générateur de champ magnétique comprenant au moins une structure magnétisante créant un champ magnétique constant dans au moins un entrefer, ladite structure magnétisante comportant un premier et un deuxième pôles magnétiques disposés en regard l'un de l'autre de part et d'autre d'un plan de symétrie et constitués chacun par un assemblage d'aimants permanents et d'un élément ferromagnétique, générateur de champ magnétique dans lequel ledit élément ferromagnétique présente une face F1 en saillie par rapport à l'assemblage formant ledit pôle magnétique et les deux éléments ferromagnétiques de ladite structure magnétisante sont disposés face à face avec un écartement formant ledit au moins un entrefer de ladite structure magnétisante.

### Technique antériéure :

Afin d'obtenir de manière économique un champ magnétique important dans un espace délimité, il est connu de réaliser un assemblage d'aimants permanents. La littérature décrit de tels assemblages notamment pour une application dans le domaine de l'imagerie médicale par résonnance magnétique. Dans ce domaine, l'on réalise des couronnes d'aimants permanents que l'on dispose côte-à-côte. Les aimants permanents utilisés présentent toutefois une structure géométrique complexe difficile à réaliser, ce qui augmente le coût de revient de l'assemblage d'aimants.

La transposition de telles structures d'aimants n'est de ce fait pas envisageable dans le cadre d'applications à volume plus restreint, et en particulier dans le domaine des générateurs thermiques magnétocaloriques. En effet, dans ces appareils, il est indispensable de générer un champ magnétique uniforme et intense dans un entrefer correspondant sensiblement au volume d'un matériau ou élément magnétocalorique afin que le champ magnétique créé puisse successivement activer et désactiver magnétiquement un ou plusieurs matériaux magnétocaloriques alternativement introduits puis retirés de l'entrefer. Plus le champ magnétique sera important, plus l'effet magnétocalorique d'un élément ou matériau magnétocalorique sera important, ce qui aura pour effet d'augmenter la puissance thermique et donc le rendement d'un tel appareil thermique magnétocalorique.

De plus, dans ces appareils, il est en outre souhaitable qu'aucun champ magnétique ne subsiste à l'extérieur de l'entrefer. Cela permet d'augmenter l'effet magnétocalorique, qui est directement dépendant de la différence de champ magnétique subie par le matériau magnétocalorique entre sa position dans l'entrefer et sa position hors de l'entrefer. S'il subsiste un champ magnétique à l'extérieur de l'entrefer, les éléments magnétocaloriques ne passent pas d'un champ magnétique nul à un champ magnétique intense entre ces deux positions. Le rendement de l'appareil n'est pas de ce fait optimal car l'efficacité des cycles magnétocaloriques et l'effet magnétocalorique sont limités.

L'article « Design of permanent-magnet field source for rotary-magnetic refrigeration systems » (S.J. Lee & al., IEEE Transactions on Magnetics Vol.38, No. 5, September 2002) propose une structure magnétisante selon le préambule de la revendication 1.

### Exposé de l'invention:

La présente invention vise à pallier ces inconvénients en proposant un générateur de champ magnétique destiné à être intégré dans un appareil thermique magnétocalorique et présentant un champ intense, uniforme et concentré dans son entrefer. Ce générateur de champ magnétique est également facile à réaliser, présente un assemblage aisé et des composants de formes géométriques simples et donc de faible coût de revient.

Dans ce but, l'invention concerne un générateur de champ magnétique tel que défini dans la revendication 1.

Les éléments magnétocaloriques sont destinés à être en contact thermique avec un fluide caloporteur circulant de leur extrémité froide vers leur extrémité chaude au cours d'une première phase du cycle magnétique qui correspond à une phase dans laquelle les matériaux ou éléments magnétocaloriques sont soumis à une augmentation de leur température et de leur extrémité chaude vers leur extrémité froide au cours d'une seconde phase du cycle magnétique dans laquelle les matériaux ou éléments magnétocaloriques sont soumis à une diminution de leur température. Le contact thermique entre le fluide caloporteur et les éléments magnétocaloriques peut être réalisé par un fluide caloporteur passant le long ou à travers des matériaux magnétocaloriques. A cet effet, les éléments magnétocaloriques peuvent être constitués par un ou plusieurs matériaux magnétocaloriques et peuvent être perméables au fluide caloporteur. Ils peuvent également comprendre des passages de circulation du fluide s'étendant entre les deux extrémités des matériaux magnétocaloriques. Ces passages peuvent être réalisés par la porosité des matériaux magnétocaloriques, ou par des canaux usinés ou obtenus par un ensemble de plaques de matériau magnétocalorique.

De préférence, le fluide caloporteur est un liquide. A cet effet, il est par exemple possible d'utiliser de l'eau pure ou additionnée d'antigel, un produit glycolé ou une saumure.

Dans chaque pôle magnétique, l'élément ferromagnétique peut comporter une section transversale quadrangulaire, chacune de ses trois faces F2, F3, F4 situées hors dudit entrefer étant en contact avec une face d'un aimant permanent correspondant.

Les faces F2, F4 de l'élément ferromagnétique peuvent être sensiblement perpendiculaires à la face F1 située dans l'entrefer et sont en contact avec une face d'un aimant permanent dit aimant latéral dont la direction d'aimantation est sensiblement perpendiculaire auxdites faces perpendiculaires F2, F4.

La face F3 de l'élément ferromagnétique, opposée à la face F1 située dans l'entrefer et dite face opposée F3, est avantageusement en contact avec un aimant permanent dit aimant opposé dont la direction d'aimantation est sensiblement perpendiculaire à ladite face opposée F3.

Les faces des aimants permanents et de l'élément ferromagnétique qui sont en contact sont de préférence de forme et de dimension identiques.

Dans le premier pôle magnétique, le sens d'aimantation des aimants latéraux et de l'aimant opposé peut être orienté à l'opposé de l'élément ferromagnétique et, dans le second pôle magnétique, le sens d'aimantation des aimants latéraux peut être orienté vers l'élément ferromagnétique, dans un sens opposé à celui des aimants latéraux du premier pôle magnétique, et le sens d'aimantation dans l'aimant opposé étant le même que celui de l'aimant opposé du premier pôle magnétique.

Dans chaque pôle magnétique, les aimants latéraux peuvent avoir une section transversale parallélépipédique et les aimants opposés peuvent présenter deux faces en contact avec des faces correspondantes des aimants latéraux de forme et de dimension identiques.

Les premier et second pôles magnétiques peuvent comporter respectivement un premier et un second dispositifs de fixation conducteurs de champ magnétique réalisés en un matériau ferromagnétique et présentant une surface de contact avec une face correspondante de l'aimant opposé desdits premier et second pôles magnétiques.

Ledit générateur peut comprendre une unique structure magnétisante, les armatures de montage pouvant être en une matière ferromagnétique et reliant latéralement lesdits premier et second pôles magnétiques.

Il peut aussi comprendre au moins deux structures magnétisantes disposées côte à côte, lesdites armatures de montages étant en une matière amagnétique.

Le générateur comporte de préférence deux armatures de montage fermant latéralement ledit générateur, disposées dans un plan sensiblement perpendiculaire au plan de symétrie et comportant chacune un aimant permanent sur sa paroi latérale située en regard de ladite structure magnétisante.

Les armatures de montage peuvent être en contact avec un aimant opposé et un aimant latéral desdits premier et second pôle magnétiques et les dispositifs de fixation peuvent présenter un bossage dans les deux zones adjacentes aux surfaces de contact entre chaque armature de montage et l'aimant opposé correspondant.

Les armatures de montage peuvent être constituées de deux parties reliées entre elles selon un écartement ajustable.

En outre, la direction et le sens d'aimantation de l'aimant permanent situé sur la paroi latérale de chaque armature de montage peuvent être identiques à ceux des aimants opposés de ladite structure magnétisante.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 est une vue en perspective d'une première forme de réalisation d'un générateur de champ magnétique ne faisant pas partie de l'invention,
- la figure 2 est un vue en coupe transversale du générateur de champ magnétique de la figure 1 représentant les lignes du champ magnétique,
- la figure 3 est une vue de face d'une variante du générateur de la figure 1,
- la figure 4 est une vue de face illustrant une autre variante du générateur de la figure 1, ne faisant pas partie de l'invention
- la figure 5 est une vue en coupe transversale du générateur de la figure 4 représentant les lignes du champ magnétique,
- la figure 6 est une vue en coupe transversale d'une autre variante de réalisation du générateur de la figure 1 ne faisant pas partie de l'invention représentant les lignes du champ magnétique,
- la figure 7 est une vue en coupe transversale d'une deuxième forme de réalisation du générateur de champ magnétique selon l'invention comportant deux entrefers et illustrant les lignes du champ magnétique,
- la figure 8 est une vue en coupe transversale d'une troisième forme de réalisation du générateur de champ magnétique comportant deux structures magnétisantes et illustrant les lignes du champ magnétique, et
- les figures 9A, 9B, 10A, 10B, 11A, 11B et 12 représentent les différentes étapes de montage du générateur de champ magnétique représenté à la figure 3.

### Illustrations de l'invention :

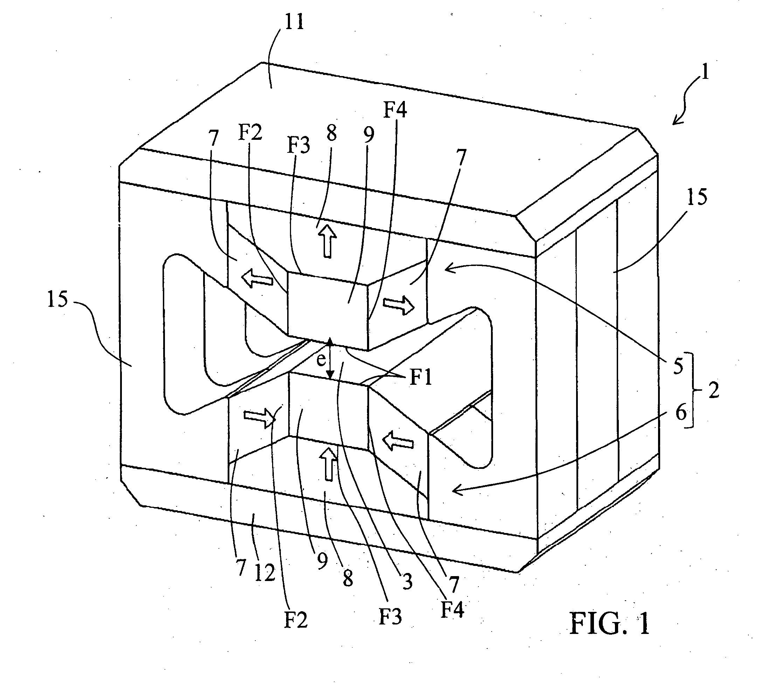

La figure 1 représente une forme de réalisation élémentaire d'un générateur 1 de champ magnétique ne faisant pas partie de l'invention. Ce générateur de champ magnétique 1 se compose d'une unique structure magnétisante 2 comportant deux pôles magnétiques 5 et 6 disposés en regard l'un de l'autre en délimitant un entrefer 3. Le premier pôle magnétique 5 est constitué par un assemblage d'aimants permanents 7 et 8 et d'un élément ferromagnétique 9. A l'exception du sens d'aimantation des aimants permanents 7 et 8, les deux pôles magnétiques 5 et 6 sont identiques.

Dans chaque pôle magnétique 5, 6, l'élément ferromagnétique 9 forme un concentrateur de champ magnétique et est en saillie par rapport aux aimants permanents 7 et 8. Il comporte une section transversale en forme de rectangle et quatre faces latérales F1, F2, F3 et F4. Une face latérale F1 est située dans l'entrefer 3. Les faces F2 et F4 qui sont perpendiculaires à la face F1 située dans l'entrefer 3 et dénommées faces perpendiculaires F2, F4 sont fixées ou intimement liées chacune à un aimant permanent dit aimant latéral 7. Chaque aimant latéral 7 présente une section parallélépipédique et les faces F2 et F4 de l'élément ferromagnétique 9 présentent la même dimension que les faces correspondantes des aimants latéraux 7. La face F3 de l'élément ferromagnétique 9 dite face opposée F3 et opposée à la face F1 située dans l'entrefer est fixée ou intimement liée à un aimant dit aimant opposé 8. Cet aimant opposé 8 présente également une face dont la dimension correspond à celle de la face F3 correspondante de l'élément ferromagnétique 9. Il présente, en outre, une section transversale en forme d'hexagone dont deux faces sont de même dimension qu'une face de chaque aimant latéral 7 à laquelle elles sont fixées ou intimement liées.

Les deux ensembles constitués chacun par deux aimants latéraux 7 et un aimant opposé 8 fixés à un élément ferromagnétique 9 et formant les deux pôles magnétiques 5, 6 sont reliés entre eux latéralement par deux armatures de montage 15 réalisées en une matière ferromagnétique et formant un retour du champ magnétique. Dans la variante représentée, chaque armature de montage 15 est en contact avec une face d'un aimant latéral 7 et une face de l'aimant opposé 8 de chaque pôle magnétique 5, 6.

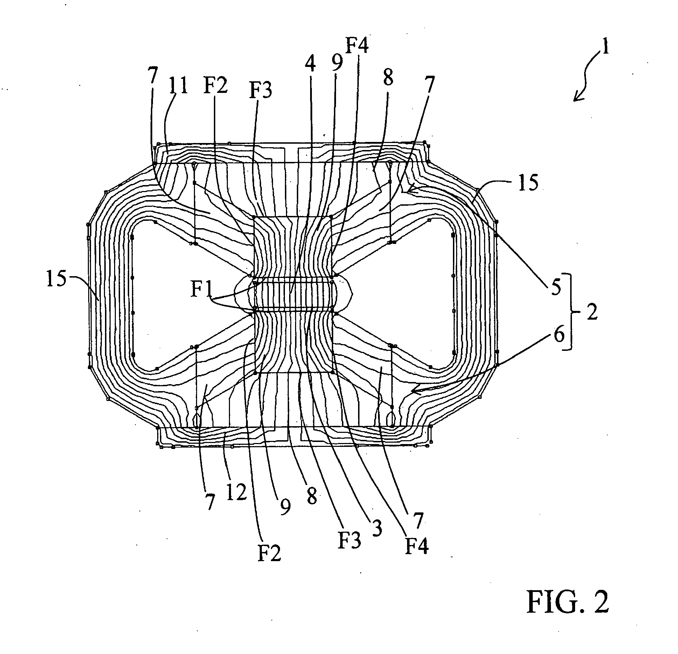

De préférence, et comme cela ressort des figures 1 et 2, les armatures de montage 15 présentent une forme comprenant un renfoncement dans lequel un ou plusieurs éléments magnétocaloriques 4 peuvent être disposés. En effet, le générateur de champ magnétique 1, 10, 20, 30, 40, 50 est destiné à soumettre au moins un élément magnétocalorique 4 à un champ magnétique variable par un mouvement relatif dudit élément magnétocalorique 4 par rapport à l'entrefer 3, 13, 23 dudit générateur de champ magnétique. Ainsi, il est nécessaire, d'une part, de prévoir un entrefer 3, 13, 23 dont le volume permet de positionner au moins un élément magnétocalorique 4 pour qu'il y subisse un champ magnétique intense et constant et, d'autre part, de prévoir un volume à l'extérieur de cet entrefer 3 et dans lequel le champ magnétique est nul ou très faible et pouvant comprendre ledit élément magnétocalorique 4. Ce volume à l'extérieur de l'entrefer 3 peut être le volume intérieur du générateur de champ magnétique hors de son entrefer 3, 13, 23 ou encore le volume situé à l'extérieur du générateur de champ magnétique.

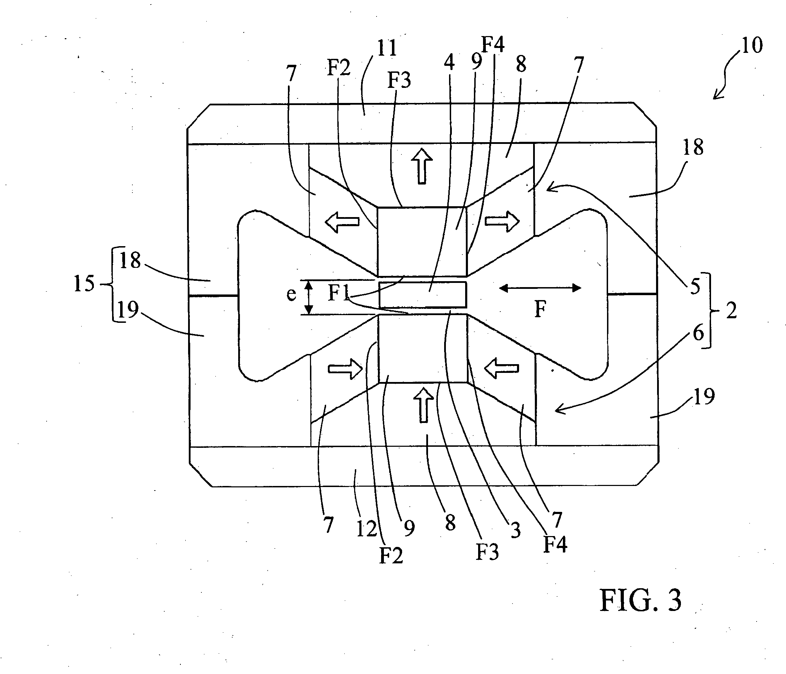

A cet effet, dans la configuration de générateur 1 de champ magnétique représentée à la figure 1, le volume extérieur à l'entrefer 3 est délimité par les deux armatures de montage 15 qui présentent une section sensiblement en forme de C. Ces armatures de montage 15 peuvent être réalisées d'un seul tenant ou par assemblage de plusieurs parties 18, 19 comme cela est représenté sur la figure 3 illustrant un générateur de champ magnétique 10 selon une première variante. Dans les générateurs de champ magnétique 1 et 10 des figures 1 à 3, ledit matériau ou élément magnétocalorique 4 se déplace de part et d'autre de l'entrefer 3 latéralement, en direction d'une armature de montage 15 puis de l'autre (voir flèche F) afin de subir des échauffements et refroidissements successifs en fonction de sa position dans ou hors de l'entrefer 3.

Avantageusement, les générateurs de champ magnétique 1 et 10 comportent également deux dispositifs de fixation 11, 12 en une matière ferromagnétique qui forment un pont magnétique et une platine de montage. Chaque dispositif de fixation 11, 12 est en contact avec un aimant opposé 8 d'un pôle magnétique 5, 6 et avec les deux armatures de montage 15.

En ce qui concerne l'aimantation des aimants 7, 8, la direction d'aimantation de l'aimant latéral 7 est perpendiculaire aux faces perpendiculaires F2, F4 et la direction d'aimantation de l'aimant opposé 8 est perpendiculaire à ladite face opposée F3. Dans le premier pôle magnétique 5, le sens d'aimantation des aimants latéraux 7 et de l'aimant opposé 8 est orienté à l'opposé de l'élément ferromagnétique 9 et dans le second pôle magnétique 6, le sens d'aimantation des aimants latéraux 7 est orienté vers l'élément ferromagnétique 9, à savoir dans un sens opposé à celui des aimants latéraux 7 du premier pôle magnétique 5 et le sens d'aimantation dans l'aimant opposé 8 étant le même que celui de l'aimant opposé 8 du premier pôle magnétique 5.

Une telle configuration permet d'obtenir un champ intense dans l'entrefer 3 avec peu d'aimants et des aimants de configuration aisée, présentant un faible coût de revient. A titre d'exemple, dans le générateur de champ magnétique 1, l'on obtient un champ magnétique de 1,22 Tesla dans l'entrefer 3 d'épaisseur e égale à 16 millimètres et des aimants permanents 7 et 8 de 1, 41 Tesla. Les lignes du champ magnétique circulant dans ce générateur de champ magnétique 1 sont illustrées à la figure 2. On constate en effet que ces lignes sont nombreuses et prépondérantes dans l'entrefer 3 dans lequel est disposé un élément magnétocalorique 4.

Dans le générateur de champ magnétique 10 représenté à la figure 3, les deux pôles magnétiques 5 et 6 peuvent être disposés selon un écart variable permettant d'ajuster l'épaisseur e de l'entrefer 3 en fonction de celle de l'élément magnétocalorique 4 et également l'intensité du champ magnétique. Cet ajustement est réalisé par l'intermédiaire des deux armatures de montage 15 qui sont constituées chacune par deux parties 18 et 19 dont l'écartement est ajustable par un système à vis ou tout autre moyen approprié.

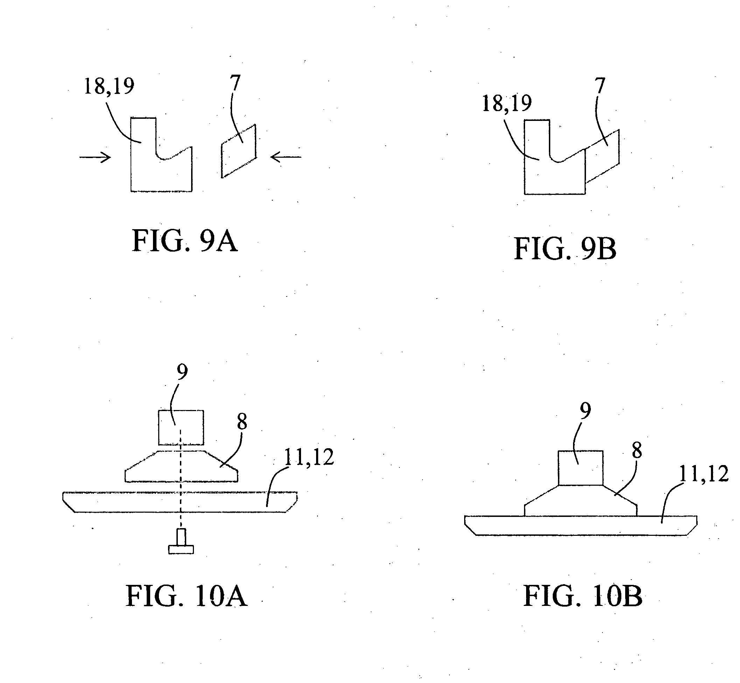

Les figures 9A, 9B, 10A, 10B, 11A, 11B et 12 représentent les différentes étapes de montage du générateur de champ magnétique 10 décrit en relation avec la figure 3. Une première étape de montage (étape i) représentée dans les figures 9A et 9B consiste à fixer par collage ou tout moyen équivalent la face d'un aimant latéral 7 à une partie 18, 19 d'une armature de montage 15. Cette étape est réalisée pour les quatre aimants latéraux 7 du générateur de champ magnétique 10. Une deuxième étape (étape ii) représentée dans les figures 10A et 10B consiste à relier entre eux par bridage, vissage ou tout moyen équivalent, un élément ferromagnétique 9 de section quadrangulaire à un dispositif de fixation 11, 12 en matière ferromagnétique en y interposant un aimant opposé 8, cet aimant opposé 8 pouvant être en appui simple ou partiellement encastré dans ledit dispositif de fixation 11, 12. Ces deux étapes i) et ii) peuvent être réalisées indépendamment dans n'importe quel ordre.

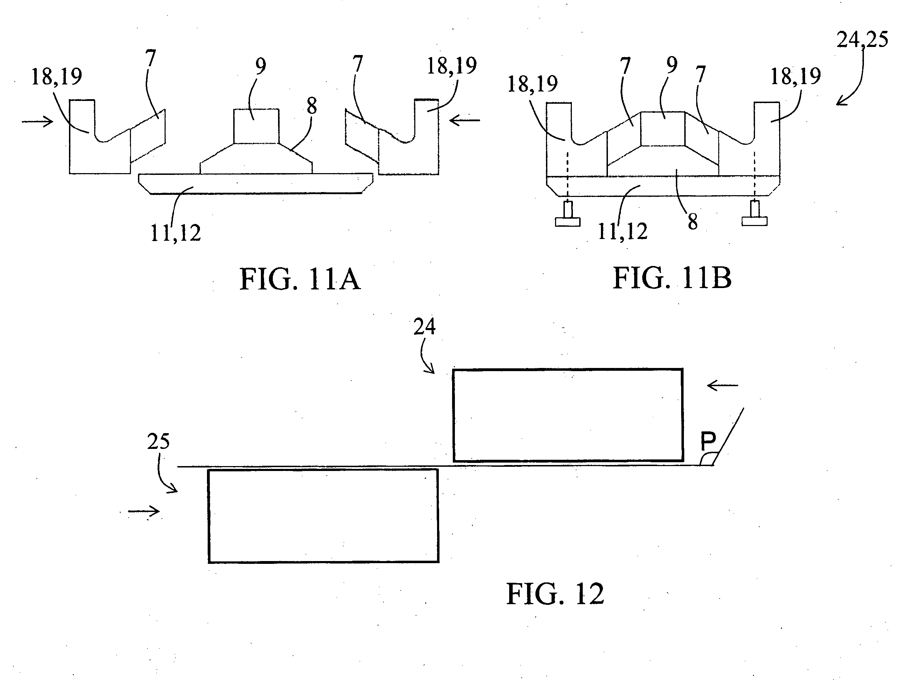

L'étape suivante (étape iii) représentée dans les figures 11A et 11B consiste à relier les sous-ensembles issus des étapes i) et ii) de sorte que chaque aimant latéral 7 comporte une surface en contact avec l'élément ferromagnétique 9 et une surface en contact avec l'aimant opposé 8 et que chaque partie 18, 19 d'une armature de montage 15 présente une surface en contact avec un dispositif de fixation 11, 12. Ici également une fixation par vissage est réalisée entre chaque dispositif de fixation 11, 12 et la partie 18, 19 correspondante des armatures de montage 15. L'on obtient ainsi deux ensembles 24, 25.

La dernière étape représentée schématiquement à la figure 12 consiste à positionner lesdits ensembles 24, 25 l'un en face de l'autre, alignés dans leur axe de symétrie, et à les déplacer par un mouvement de translation de l'un par rapport à l'autre parallèlement au plan de symétrie P de sorte que les parties 18 et 19 des deux armatures de montage 15 accostent simultanément et s'auto-positionnent, pour amener les deux éléments ferromagnétiques 9 face à face et former l'entrefer 3.

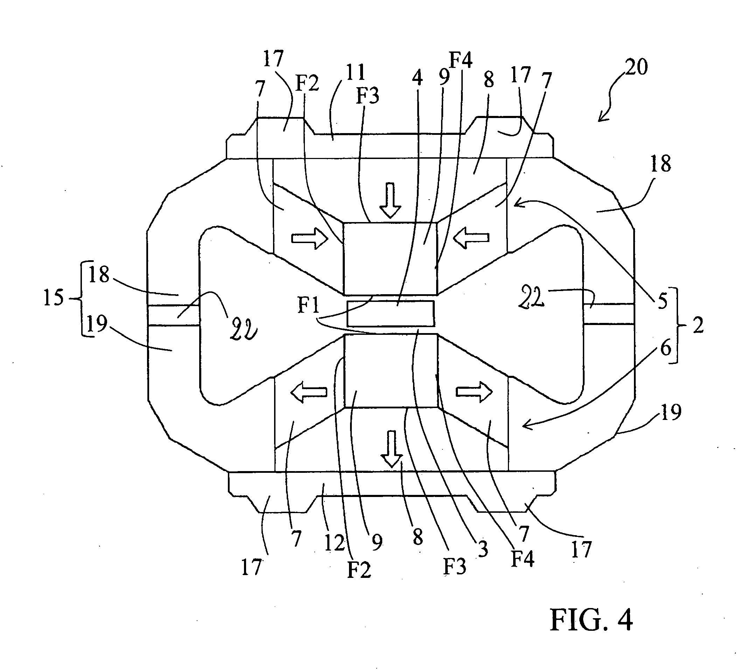

La fixation des deux ensembles 24, 25 l'un par rapport à l'autre peut être réalisée avec ajustement variable de la distance les séparant en prévoyant une cale 22 (cf. fig. 4) ou un système de réglage à vis ou similaire.

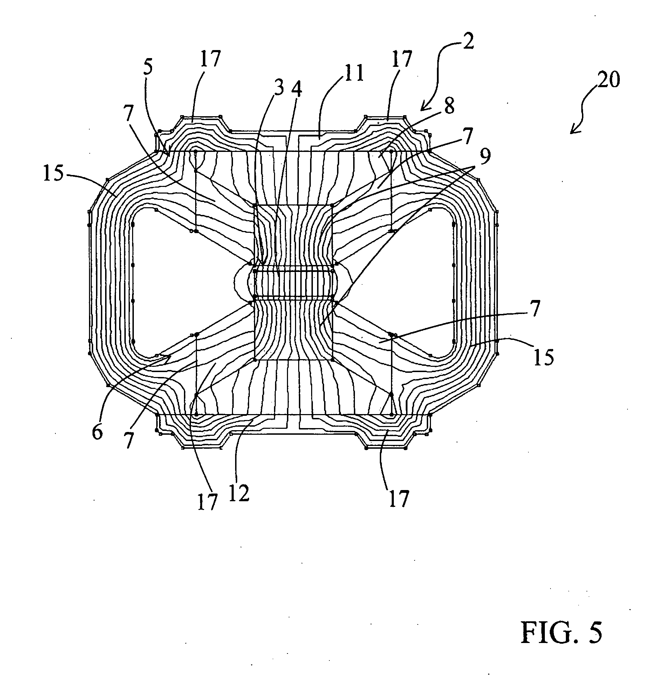

Les figures 4 et 5 représentent un générateur de champ magnétique 20 selon une autre variante de réalisation ne faisant pas partie de l'invention. Ce générateur de champ magnétique 20 présente les mêmes avantages et une même intensité de champ magnétique dans l'entrefer 3 que ceux relatifs aux générateurs de champ magnétique 1, 10 représentés dans les figures 1 à 3.

Il se distingue du générateur de champ magnétique 10 de la figure 3 par la présence d'une cale 22 disposée entre les parties 18 et 19 de l'armature de montage 15 dont l'épaisseur est choisie en fonction de l'entrefer 3. Il se distingue également par la présence d'un bossage 17 réalisé dans chaque dispositif de fixation 11, 12 au niveau des zones adjacentes aux surfaces de contact entre chaque armature de montage 15 et un aimant opposé 8. Ces bossages 17 permettent d'éviter une éventuelle saturation de champ magnétique dans lesdits dispositifs de fixation 11, 12 et permettent donc de garantir un champ magnétique maximal dans l'entrefer 3. La figure 5 illustre le champ magnétique dans ledit générateur de champ magnétique 20 dans lequel l'écartement entre les deux parties 18 et 19 de chaque armature de montage 15 est nul.

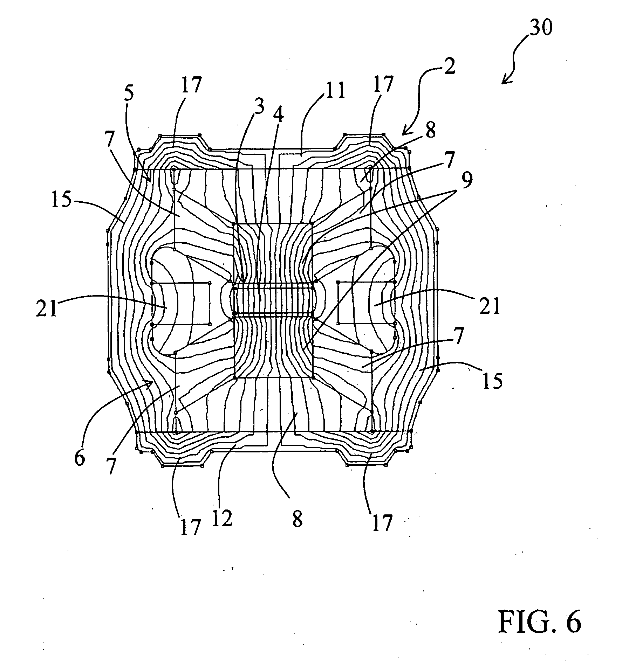

La figure 6 représente un générateur de champ magnétique 30 selon encore une autre variante de réalisation ne faisant pas partie de l'invention. Ce générateur de champ magnétique 30 permet encore d'accroitre le champ magnétique dans l'entrefer 3 afin d'atteindre 1,36 Tesla. Il se distingue du générateur de champ magnétique 20 représenté dans les figures 4 et 5 par le fait que la paroi intérieure de chaque armature de montage 15 comprend un aimant permanent 21 dont la direction et le sens d'aimantation sont identiques à ceux des aimants opposés 8. Bien entendu, cette disposition peut s'étendre à toutes les formes de réalisation illustrées et décrites.

Dans le générateur de champ magnétique 30 illustré à la figure 6, le ou les éléments magnétocaloriques 4 sont destinés à se déplacer dans la direction perpendiculaire à celle de leur déplacement dans le générateur de champ magnétique 1, 10 représenté dans les figures 1 à 3. Il est toutefois également possible d'aménager un volume pour positionner lesdits éléments magnétocaloriques 4 dans l'enceinte de ce générateur de champ magnétique 30. Un tel aménagement peut être facilement obtenu en modifiant la forme des deux armatures de montage 15, par exemple en leur affectant une forme plus arquée que celle représentée dans la figure 6.

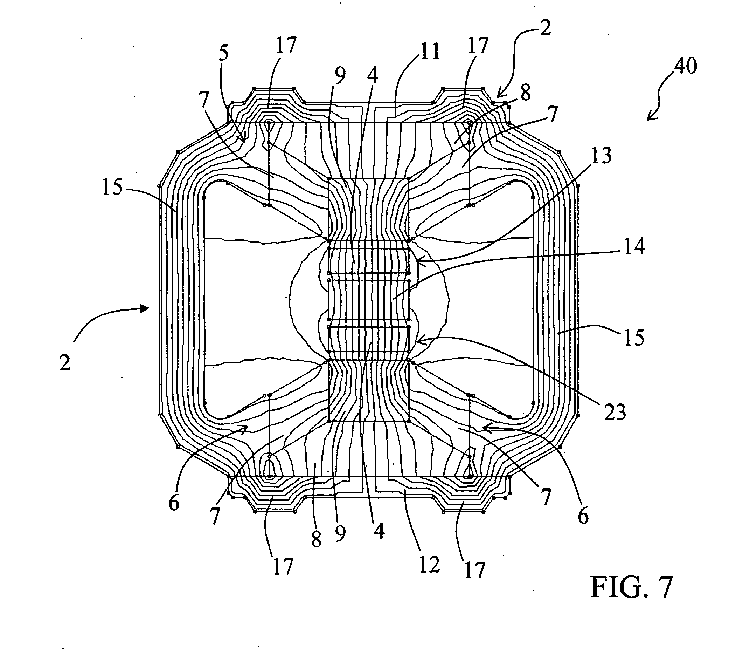

Le générateur de champ magnétique 40 selon l'invention et représenté à la figure 7 se distingue de celui de la figure 6 par le fait qu'il comprend deux entrefers 13 et 23. Un aimant 14 dont la direction et le sens d'aimantation est identique à ceux des aimants opposés 8 est positionné entre les deux éléments ferromagnétiques 9 de la structure magnétisante 2. Cet aimant 14 peut être remplacé par une pièce ferromagnétique. Le maintien en position de cet aimant ou de cette pièce 14 peut être réalisé par l'intermédiaire d'une matière thermoplastique ou par tout autre dispositif équivalent, magnétique ou amagnétique. Cet aimant ou cette pièce 14 forme ainsi avec chaque élément ferromagnétique 9 un entrefer 13, 23.

L'avantage de cette configuration réside dans le fait que pour un encombrement et un poids sensiblement équivalents à ceux des générateurs de champ magnétiques 1, 10, 20 et 30 déjà décrits il est possible d'obtenir deux entrefers 13, 23 susceptibles de solliciter plus d'éléments magnétocaloriques 4 et donc d'accroître le rendement d'un appareil thermique comprenant ledit générateur de champ magnétique 40.

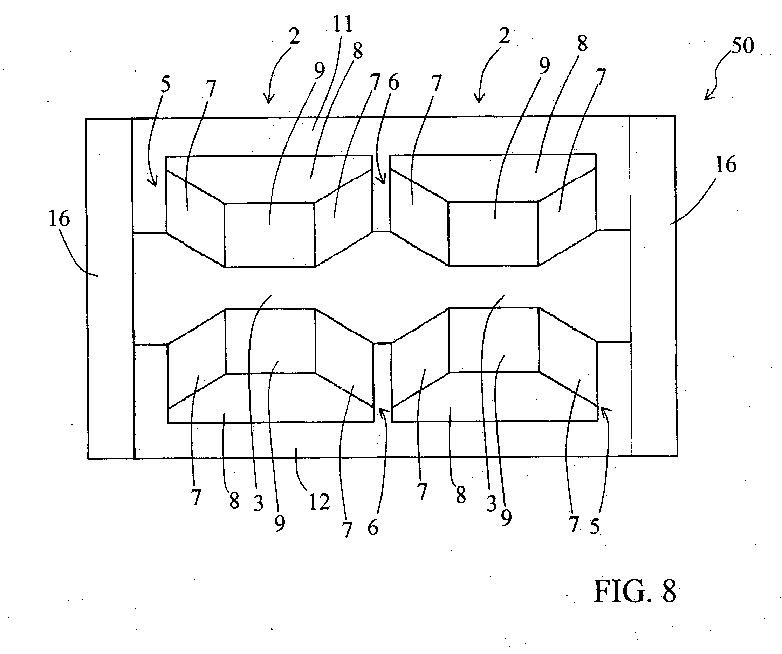

Le générateur 50 de champ magnétique représenté à la figure 8 comporte, quant à lui, deux structures magnétisantes 2 identiques et disposées côte à côte. Pour obtenir un champ magnétique maximal dans l'entrefer 3 de chaque structure magnétisante 2, il est nécessaire que le premier pôle magnétique 5 d'une structure magnétisante 2 soit disposé à côté du second pôle magnétique 6 de l'autre structure magnétisante 2. Cela permet de réaliser une boucle magnétique entre les deux structures magnétisantes 2. Dans cette configuration, les armatures de montage 16 sont réalisées en une matière amagnétique.

Cette configuration permet également de solliciter magnétiquement plus d'éléments magnétocaloriques 4 et donc d'accroître le rendement d'un appareil thermique comprenant ledit générateur de champ magnétique 50.

La configuration du générateur de champ magnétique 40 selon l'invention permet d'utiliser des aimants permanents 7, 8, 14 dont la forme est aisée à réaliser et dont l'aimantation est anisotrope.

Les générateurs de champ magnétique 1, 10, 20, 30, 40 et 50 illustrés par l'ensemble des figures, dont seul le générateur 40 est conforme à l'invention, sont destinés à être intégrés dans un appareil thermique comportant au moins un élément magnétocalorique 4. Cet élément magnétocalorique 4 peut être constitué par un ou plusieurs matériaux magnétocaloriques 4 et est traversé ou en contact par un fluide caloporteur circulant de manière alternée en direction d'une première extrémité dudit élément magnétocalorique 4 puis en direction de sa deuxième extrémité, de manière synchronisée avec le changement de position dudit élément magnétocalorique 4, dans et hors de l'entrefer 3, 13, 23.

De préférence, l'élément magnétocalorique 4 est monté coulissant dans l'entrefer 3, 13, 23 du générateur de champ magnétique et entraîné selon un déplacement de translation de va-et-vient ou de rotation continue.

### Possibilités d'application industrielle:

Il ressort clairement de cette description que l'invention permet d'atteindre les buts fixés, à savoir proposer un générateur de champ magnétique dont la réalisation est structurellement simple et économique et qui permet d'obtenir un champ magnétique important avec relativement peu de matière aimantée. Un tel générateur peut notamment trouver une application aussi bien industrielle que domestiqua lorsqu'il est intégré dans un appareil thermique magnétocalorique destiné à être exploité dans le domaine du chauffage, de la climatisation, du tempérage, du refroidissement ou autres, à des coûts compétitifs et avec un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur de champ magnétique (40) pour un appareil thermique magnétocalorique, ledit générateur de champ magnétique (40) comprenant au moins une structure magnétisante (2) créant un champ magnétique constant dans au moins un entrefer (13, 23), ladite structure magnétisante (2) comportant un premier (5) et un deuxième (6) pôles magnétiques disposés en regard l'un de l'autre de part et d'autre d'un plan de symétrie (P) et constitués chacun par un assemblage d'aimants permanents (7, 8) et d'un élément ferromagnétique (9), générateur de champ magnétique dans lequel ledit élément ferromagnétique (9) présente une face (F1) en saillie par rapport à l'assemblage formant ledit pôle magnétique (5, 6) et les deux éléments ferromagnétiques (9) de ladite structure magnétisante (2) sont disposés face à face avec un écartement formant ledit au moins un entrefer (13, 23) de ladite structure magnétisante (2), générateur **caractérisé en ce qu'**un aimant ou une pièce ferromagnétique (14) est disposé dans le plan (P), entre lesdits premier (5) et second (6) pôles magnétiques et forme un entrefer (13, 23) avec chacune des deux faces (F1) correspondantes des éléments ferromagnétiques (9) desdits premier (5) et second (6) pôles magnétiques.

2. Générateur, selon la revendication 1, **caractérisé en ce que**, dans chaque pôle magnétique (5, 6), ledit élément ferromagnétique (9) comporte une section transversale quadrangulaire et **en ce que** chacune de ses trois faces (F2, F3, F4) situées hors dudit entrefer (13, 23) est en contact avec une face d'un aimant permanent (7, 8) correspondant.

3. Générateur, selon la revendication 2, **caractérisé en ce que** les faces (F2, F4) de l'élément ferromagnétique (9) sont sensiblement perpendiculaires à la face (F1) située dans ledit entrefer (13, 23) et sont en contact avec une face d'un aimant permanent dit aimant latéral (7) dont la direction d'aimantation est sensiblement perpendiculaire auxdites faces perpendiculaires (F2, F4).

4. Générateur, selon la revendication 2, **caractérisé en ce que** la face (F3) de l'élément ferromagnétique (9), opposée à la face (F1) située dans ledit entrefer (13, 23) et dite face opposée (F3), est en contact avec un aimant permanent dit aimant opposé (8) dont la direction d'aimantation est sensiblement perpendiculaire à ladite face opposée (F3).

5. Générateur, selon l'une quelconque des revendications 2 à 4, **caractérisé en ce que** les faces des aimants permanents (7, 8) et de l'élément ferromagnétique (9) qui sont en contact sont de forme et de dimension identiques.

6. Générateur, selon les revendications 3 et 4, **caractérisé en ce que**, dans le premier pôle magnétique (5), le sens d'aimantation des aimants latéraux (7) et de l'aimant opposé (8) est orienté à l'opposé de l'élément ferromagnétique (9) et **en ce que**, dans le second pôle magnétique (6), le sens d'aimantation des aimants latéraux (7) est orienté vers l'élément ferromagnétique (9) dans un sens opposé à celui des aimants latéraux (7) du premier pôle magnétique (5) et le sens d'aimantation dans l'aimant opposé (8) étant le même que celui de l'aimant opposé (8) du premier pôle magnétique (5).

7. Générateur, selon l'une quelconque des revendications 2 à 6, **caractérisé en ce que**, dans chaque pôle magnétique (5, 6), les aimants latéraux (7) ont une section transversale parallélépipédique et les aimants opposés (8) présentent deux faces en contact avec des faces correspondantes des aimants latéraux (7) et sont de forme et de dimension identiques.

8. Générateur, selon l'une quelconque des revendications 2 à 7, **caractérisé en ce que** lesdits premier (5) et second (6) pôles magnétiques comportent respectivement un premier (11) et un second (12) dispositifs de fixation conducteurs de champ magnétique réalisés en un matériau ferromagnétique et présentant une surface de contact avec une face correspondante de l'aimant opposé (8) desdits premier (5) et second (6) pôles magnétiques.

9. Générateur, selon l'une quelconque des revendications précédentes, **caractérisé en ce qu'**il comprend une unique structure magnétisante (2) et **en ce que** lesdites armatures de montage (15) sont en une matière ferromagnétique et relient latéralement lesdits premier (5) et second (6) pôles magnétiques.

10. Générateur, selon l'une quelconque des revendications 1 à 8, **caractérisé en ce que** qu'il comprend au moins deux structures magnétisantes (2) disposées côte à côte et **en ce que** lesdites armatures de montages (16) sont en une matière amagnétique.

11. Générateur, selon l'une quelconque des revendications précédentes, **caractérisé en ce qu'**il comporte deux armatures de montage (15, 16) fermant latéralement ledit générateur (40), disposées dans un plan sensiblement perpendiculaire au plan de symétrie (P) et comportant chacune un aimant permanent (21) sur sa paroi latérale située en regard de ladite structure magnétisante (2).

12. Générateur, selon l'une quelconque des revendications précédentes, **caractérisé en ce que** lesdites armatures de montage (15) sont en contact avec un aimant opposé (8) et un aimant latéral (7) desdits premier et second pôle magnétiques (5, 6) et **en ce que** lesdits dispositifs de fixation (11, 12) présentent un bossage (17) dans les deux zones adjacentes aux surfaces de contact entre chaque armature de montage (15) et l'aimant opposé (8) correspondant.

13. Générateur, selon l'une quelconque des revendications précédentes, **caractérisé en ce que** lesdites armatures de montage (15) sont constituées de deux parties (18 et 19) reliées entre elles selon un écartement ajustable.

## Patentansprüche

1. Magnetfeldgenerator (40) für eine magnetokalorische thermische Vorrichtung, wobei besagter Magnetfeldgenerator (40) zumindest eine Magnetisierungsstruktur (2) beträgt, die ein konstantes Magnetfeld in zumindest einem Luftspalt (13, 23) erzeugt, wobei besagte Magnetisierungsstruktur (2) einen ersten (5) und einen zweiten (6) Magnetpol beträgt, die beidseitig einer Symmetrie-Ebene (P) gegenüberliegend angeordnet sind und jeweils aus einer Zusammenfügung von Permanentmagneten (7, 8) und eines ferromagnetischen Elements (9) bestehen, Magnetfeldgenerator in dem das besagte ferromagnetische Element (9) eine Seite (F1) aufweist, die in Bezug auf die Zusammenfügung, die besagten Magnetpol (5, 6) bildet, vorsteht, und die beiden ferromagnetischen Elemente (9) von besagter Magnetisierungsstruktur (2) mit einem Abstand, der besagten zumindest einen Luftspalt (13, 23) von besagter Magnetisierungsstruktur (2) bildet, sich gegenüberstehend angeordnet sind, **dadurch gekennzeichnete**r Generator, dass ein Magnet oder ein ferromagnetisches Teil (14) in Ebene (P) zwischen besagtem ersten (5) und zweiten (6) Magnetpol angeordnet ist und mit jeder der beiden entsprechenden Seiten (F1) der ferromagnetischen Elemente (9) von besagtem ersten (5) und zweiten (6) Magnetpol einen Luftspalt (13, 23) bildet.

2. Generator nach Anspruch 1, **dadurch gekennzeichnet, dass** in jedem Magnetpol (5, 6) das besagte ferromagnetische Element (9) einen viereckigen Querschnitt aufweist und dadurch, dass jede seiner drei außerhalb des besagten Luftspalts (13, 23) angeordneten Seiten (F2, F3, F4) mit einer Seite eines entsprechenden Permanentmagneten (7, 8) in Berührung ist.

3. Generator nach Anspruch 2, **dadurch gekennzeichnet, dass** die Seiten (F2, F4) des ferromagnetischen Elements (9) merklich senkrecht zur in besagtem Luftspalt (13, 23) befindlichen Seite (F1) sind und mit einer Seite eines als Seitenmagnet (7) bezeichneten Permanentmagneten in Berührung sind, dessen Magnetisierungsrichtung merklich senkrecht zu besagten senkrechten Seiten (F2, F4) ist.

4. Generator nach Anspruch 2, **dadurch gekennzeichnet, dass** die gegenüber der in besagtem Luftspalt (13, 23) befindlichen Seite (F1) liegende und als gegenüberliegende Seite (F3) bezeichnete Seite (F3) des ferromagnetischen Elements (9) mit einem als gegenüberliegender Magnet (8) bezeichneten Permanentmagneten in Berührung ist, dessen Magnetisierungsrichtung merklich senkrecht zu besagten gegenüberliegenden Seite (F3) ist.

5. Generator nach einem beliebigen der Ansprüche 2 bis 4, **dadurch gekennzeichnet, dass** die Seiten der Permanentmagnete (7, 8) und des ferromagnetischen Elements (9), die sich berühren, identische Formen und Abmessungen aufweisen.

6. Generator nach Ansprüche 3 und 4, **dadurch gekennzeichnet, dass** in dem ersten Magnetpol (5) die Magnetisierungsrichtung der Seitenmagnete (7) und des gegenüberliegenden Magneten (8) in die dem ferromagnetischen Element (9) entgegen gesetzte Richtung orientiert ist, und dadurch, dass im zweiten Magnetpol (6) die Magnetisierungsrichtung der Seitenmagnete (7) in Richtung des ferromagnetischen Elements (9), in eine der Richtung der Seitenmagnete (7) des ersten Magnetpols (5) entgegen gesetzte Richtung orientiert ist, und die Magnetisierungsrichtung des gegenüberliegenden Magneten (8) die selbe als die des gegenüberliegenden Magneten (8) des ersten Magnetpols (5) ist.

7. Generator nach einem beliebigen der Ansprüche 2 bis 6, **dadurch gekennzeichnet, dass** in jedem Magnetpol (5, 6) die Seitenmagnete (7) einen quaderförmigen Querschnitt aufweisen, und die gegenüberliegenden Magnete (8) zwei Seiten betragen, die mit entsprechenden Seiten der Seitenmagnete (7) in Berührung stehen und identische Formen und Abmessungen aufweisen.

8. Generator nach einem beliebigen der Ansprüche 2 bis 7, **dadurch gekennzeichnet, dass** besagter erster (5) und zweiter (6) Magnetpol jeweils eine erste (11) und eine zweite (12) aus einem ferromagnetischen Material hergestellte Befestigungs- und Magnetfeldleitvorrichtung betragen, die eine Berührungsfläche mit einer entsprechenden Seite des gegenüberliegenden Magneten (8) des besagten ersten (5) und zweiten (6) Magnetpols aufweist.

9. Generator nach einem beliebigen der vorhergehenden Ansprüche, **dadurch gekennzeichnet, dass** er eine einzige Magnetisierungsstruktur (2) beträgt und dadurch, dass besagte Montagearmaturen (15) aus einem ferromagnetischen Material hergestellt sind und seitlich besagten ersten (5) und zweiten (6) Magnetpol verbinden.

10. Generator nach einem beliebigen der Ansprüche 1 bis 8, **dadurch gekennzeichnet, dass** er zumindest zwei nebeneinander angeordnete Magnetisierungsstrukturen (2) beträgt, und dadurch, dass die besagten Montagearmaturen (16) aus einem nichtmagnetischen Material hergestellt sind.

11. Generator nach einem beliebigen der vorhergehenden Ansprüche, **dadurch gekennzeichnet, dass** er zwei Montagearmaturen (15, 16) beträgt, die besagten Generator (40) seitlich abschließen, in einer zur Symmetrie-Ebene (P) merklich senkrechten Ebene angeordnet sind und jeweils auf deren gegenüber der besagten Magnetisierungsstruktur (2) befindlichen Seitenwand einen Permanentmagneten (21) betragen.

12. Generator nach einem beliebigen der vorhergehenden Ansprüche, **dadurch gekennzeichnet, dass** die besagten Montagearmaturen (15) mit einem gegenüberliegenden Magneten (8) und mit einem Seitenmagneten (7) der besagten ersten und zweiten (5, 6) Magnetpole in Berührung stehen, und dadurch, dass die besagten Befestigungsvorrichtungen (11, 12) in den beiden Bereichen, die an den Berührungsflächen zwischen jeder Montagearmatur (15) und dem entsprechenden gegenüberliegenden Magneten (8) anliegen, einen Vorsprung (17) aufweisen.

13. Generator nach einem beliebigen der vorhergehenden Ansprüche, **dadurch gekennzeichnet, dass** die besagten Montagearmaturen (15) aus zwei Teilen (18 und 19) bestehen, die mit einem verstellbaren Abstand miteinander verbunden sind.

## Claims

1. Magnetic field generator (40) for a magnetocaloric thermal appliance, said magnetic field generator (40) including at least one magnetising structure (2) creating a constant magnetic field in at least one air gap (13, 23), said magnetising structure (2) containing a first (5) and a second (6) magnetic poles arranged facing each other on each side of a symmetry plane (P) and each made up of an assembly of permanent magnets (7, 8) and of a ferromagnetic element (9), magnetic field generator in which said ferromagnetic element (9) presents one face (F1) protruding with reference to the assembly forming said magnetic pole (5, 6) and the two ferromagnetic elements (9) of said magnetising structure (2) are arranged face to face with a distance forming the said at least one air gap (13, 23) of said magnetising structure (2), generator **characterised in that** a magnet or a ferromagnetic part (14) is placed in the plane (P), between said first (5) and second (6) magnetic poles and forms an air gap (13, 23) with each of the two corresponding faces (F1) of the ferromagnetic elements (9) of said first (5) and second (6) magnetic poles.

2. Generator according to claim 1, **characterised in that**, in each magnetic pole (5, 6), said ferromagnetic element (9) contains a quadrangular transversal cross-section and **in that** each of its three faces (F2, F3, F4) located outside said air gap (13, 23) is in contact with a face of a corresponding permanent magnet (7, 8).

3. Generator according to claim 2, **characterised in that** the faces (F2, F4) of the ferromagnetic element (9) are approximately perpendicular to the face (F1) located in said air gap (13, 23) and are in contact with a face of a permanent magnet called lateral magnet (7) whose direction of magnetisation is approximately perpendicular to said perpendicular faces (F2, F4).

4. Generator according to claim 2, **characterised in that** the face (F3) of the ferromagnetic element (9), opposite to the face (F1) located in said air gap (13, 23) and called opposite face (F3), is in contact with a permanent magnet called opposite magnet (8) whose direction of magnetisation is approximately perpendicular to said opposite face (F3).

5. Generator according to any of claims 2 to 4, **characterised in that** the faces of the permanent magnets (7, 8) and of the ferromagnetic element (9) that are in contact are of identical shape and dimension.

6. Generator according to claims 3 and 4, **characterised in that**, in the first magnetic pole (5), the direction of magnetisation of the lateral magnets (7) and of the opposite magnet (8) is oriented opposite to the ferromagnetic element (9) and **in that**, in the second magnetic pole (6), the direction of magnetisation of the lateral magnets (7) is oriented towards the ferromagnetic element (9) in a direction opposite to that of the lateral magnets (7) of the first magnetic pole (5) and the direction of magnetisation in the opposite magnet (8) being the same as that of the opposite magnet (8) of the first magnetic pole (5).

7. Generator according to any of claims 2 to 6, **characterised in that** in each magnetic pole (5, 6), the lateral magnets (7) have a parallelepipedic transversal cross-section and the opposite magnets (8) present two faces in contact with corresponding faces of the lateral magnets (7) and are of identical shape and dimension.

8. Generator according to any of claims 2 to 7, **characterised in that** said first (5) and second (6) magnetic poles contain respectively a first (11) and a second (12) magnetic field-conductive fastening devices made of a ferromagnetic material and presenting a contact surface with a corresponding face of the opposite magnet (8) of said first (5) and second (6) magnetic poles.

9. Generator according to any of the previous claims, **characterised in that** it contains a single magnetising structure (2) and **in that** said mounting armatures (15) are made of a ferromagnetic material and connect laterally said first (5) and second (6) magnetic poles.

10. Generator according to any of the previous claims I to 8, **characterised in that** it contains at least two magnetising structures (2) arranged side by side and **in that** said mounting armatures (16) are made of a non-magnetic material.

11. Generator according to any of the previous claims, **characterised in that** it comprises two mounting armatures (15, 16) closing laterally said magnetic field generator (40), arranged in a plane approximately perpendicular to the symmetry plane (P) and each comprising a permanent magnet (21) on its lateral wall located facing said magnetising structure (2).

12. Generator according to any of the previous claims, **characterised in that** said mounting armatures (15) are in contact with an opposite magnet (8) and a lateral magnet (7) of said first and second magnetic poles (5, 6) and **in that** said fastening devices (11, 12) present a boss (17) in the two zones adjacent to the contact surfaces between each mounting armature (15) and the corresponding opposite magnet (8).

13. Generator according to any of the previous claims, **characterised in that** said mounting armatures (15) are made up of two parts (18 and 19) connected with each other with an adjustable distance.
